# EUROPEAN PATENT APPLICATION

(11) **EP 2 634 080 A1**
(43) Date of publication of application: **04.09.2013**
(21) Application number: 11822016.9
(22) Date of filing: 22.04.2011
(51) Int. Cl.: B63B 35/32, E02B 15/00, B09B 5/00, F23G 5/46

(54) **SHIP FOR PROCESSING MARINE WASTE INTO RESOURCE FOR COLLECTING MARINE WASTE AT SEA, PREPROCESSING, AND SUPPLYING POWER TO ISLAND REGIONS**

(30) Priority: 01.09.2010 KR 20100085380
(71) Applicant: Halla Engineering&Industrial Development Co. Ltd., Gyeonggi-do 442-834 (KR)
(72) Inventor: PARK, Sang Pyo, Hanam-si Gyeonggi-do 465-120 (KR); NAM, Kee Young, Changwon-si Gyeongsangnam-do 642-777 (KR); SEO, Bong Seok, Yongin-si Gyeonggi-do 448-160 (KR); LEE, Dong Hoon, Namyangju-si Gyeonggi-do 472-938 (KR); CHO, Sang Ki, Seongnam-si Gyeonggi-do 461-182 (KR); KIM, Jung Tae, Seoul 138-110 (KR)
(74) Representative: Zoli, Filippo
(86) International application number: PCT/KR2011/002958
(87) International publication number: WO 2012/030041

(57) **Abstract**

The present invention relates to a ship for processing marine waste into a resource for collecting marine waste at sea, preprocessing, and supplying power to island regions, and provides a ship for processing marine waste into a resource comprising: A) a marine waste collection device for collecting marine waste which is accumulated on the coast into the ship; B) a first bunker, which is a storage tank for depositing the marine waste that is transported by the marine waste collection device, for preliminarily removing sea water substances in the marine waste which is transported; C) a crushing device for crushing the marine waste which is deposited in the first bunker; D) a sorting device for sorting by type the crushed marine waste which passes through the crushing device; E) a sorted product storage tank, which is a storage tank for storing by type the products through the sorting device according, including a sorted metal storage tank, a sorted non-metal storage tank, and sorted combustible product storage tank; F) a drying device for secondarily removing moisture from combustible products in the sorted combustible product storage tank; G) a second bunker for storing the sorted combustible products which are dried by the drying device; H) a first crane for dropping into an incinerator the combustible products which are deposited into the second bunker; I) the incinerator for creating a heat energy source by burning in the second bunker the sorted combustible products which are transported and dropped by the first crane; J) a collection/processing device for collecting and storage-processing the ashes of the sorted combustible products created from the incinerator; K) a boiler for using the heat energy source generated from the incinerator for power generation (and accumulation) for sailing the ship; L) a generator for producing power by means of the steam which is produced from the boiler; and M) a power transmission device including a power transmission cable for delivering the power which is generated by the generator, by connecting to submarine cables installed in island regions. The present invention can not only reduce the cost of land transportation required to process marine waste which is accumulated in the sea but also can effectively and fundamentally prevent environmental problems that occur in the process of transporting, because the marine waste is processed on the sea by the ship of the present invention. Also, the present invention can fundamentally resolve secondary environmental problems, such as securing reclaimed land and soil pollution due to conventional burying of marine waste in the land, and transforms the problem of simply burning marine waste, which emits high heat, into creating energy by means of burning. In addition, by using the converted energy for sailing the ship to the locations where marine waste is accumulated, the use of crude oil traditionally required for sailing can be dramatically reduced to cut costs, and furthermore, the converted energy source is high-quality electricity that can be supplied to island regions, which are marginalized areas in terms of power supply, thereby effectively reducing costs for building an additional power generating facility in the island regions and contributing to facilitating access to the energy source.

## Description

### Cross-reference to related application

This application claims the benefit of Korean Patent Application No.10-2010-0085380, filed on September 1, 2010 in the Korean Intellectual Property Office, the disclosure of which is incorporated herein by reference.

### Technical Field

The present invention relates to a system for processing marine wastes and a waste-to-energy system, and in particular to a ship which can use a new recycle energy and is capable of generating electric power using marine wastes which used to be stacked at shores and used to be burnt and is capable of supplying electric power to island regions.

### Background Art

Marine wastes, which grow due to the various behaviors on land and at sea and fishing activities, cause many problems such as a shore environment destroy, a marine ecosystem damage and a marine safety accident. Besides, a marine becomes a critical and dangerous state. Such problems reach a critical state going beyond a self-purification capacity of marine itself because of an expansion of and city development in seaside industry complexes near a shore region and marine floating wastes, wastes deposed at sea bottom and contaminated sediments which develop due to the increases of contaminants as life standards are enhanced.

In the 1980s, the modification of London Dumping Protocol organized by IMO and the international adaptations of marine contamination prevention laws came to help increase the attentions to such problems. In recent years, many surveys on the marine contamination sources diverse researches on the influences to marine ecosystems are vein conducted.

Much efforts to the developments and introductions of actual equipments which will be used for the sake of the surveys, collections, disposals and recycles of the marine wastes are being conducted. In particular, the collections and disposals of such marine wastes are being considered as a hard-to-handle problem in terms of civil petition treatments. Much efforts are being conducted in relation to the recycling of marine wastes thanks to the distributions of improved recognitions on the recycling of energies.

The marine wastes are formed of simple waste compositions as compared to land wastes and contain lots of substances which can be converted into resources and are high in the generations of energies and are low in the developments of decays and generations of bad smell, which does not require fast treatments. Meanwhile, the wastes are high in the variations of moisture content, and the treatment facilities may easily go corroded due to salty components, there are produced lots of wastes which require cutting and crushing procedures, and the spots where wastes are produced are distributed, so it is not easy to set up a collection and loading and unloading system.

In consideration of the above described features of the marine wastes, there was developed a preprocessing system which is designed to eliminate salty components and impurities which are contained in the marine wastes for the sake of a stable treatment of the marine wastes. The technical approach to the treatments of the collected marine wastes starts from the stabilization of the wastes containing sea water, but it should be extended to the resource productions based on the features of the wastes. Currently, there is provided a preprocessing system which is composed of a washing device, a cutting device, a crushing device, a dehydration device and a drying device which are all provided for the purpose of minimizing the productions of contaminations due to the processing facilities in such a way to prevent the corrosion of treatment facilities due to salty components, to make it possible to treat large size wastes (timber, rope, etc.) and to maximize the resource productions from marine wastes; however the above mentioned preprocessing system has problems in that it is usually far from the spot whether the marine wastes stacked at shores are collected and treated, which consequently requires a double transportation procedure on the land, so energy efficiency are low.

In more details, the treatments of wastes are largely depending on the burial way; however the dependency trends with respect to the incineration due to the problems which occur in obtaining the waste disposal sites and the secondary contaminations are gradually increasing. That is, the wastes collected from marine regions are 300 thousand tons per year, of which only 100 thousand tons are treated. The collected wastes are buried and incinerated and part of the metals is treated in a recycling method. Waste tires are recycled as an assistant fuel of a cement sintering furnace. Most of the marine wastes except for the non-recyclable wastes is generally incinerated in a specified waste incineration furnace or are buried at a specified burial site. The specified waste treatment facility is generally located in a large size industrial complex site such as Gyunggi, Ulsan, Yeosu, etc., so it is far from the marine waste collection site, for thereby requiring expensive treatment costs and increased transportation costs for the sake of marine waste treatments.

The destroy of life environment and various environment problems which occur due to the transportation vehicles of wastes cause the residents to oppose the installation of the environment facility, the effects of which currently influences the treatment of the marine wastes.

In terms of the collection, treatment and recycle of the marine wastes, the stacking and collecting places of marine wastes are randomly located around the shore, so it needs to overcome the problems that the marine wastes should be transported from each shore through the land, for which various technologies and devices are required.

The Korean Patent Registration No. 0595026 relates to "A special ship of combined treatment system for marine debris" which is directed to an automation system which has features in that all the overland transportations can be processed with the aid of transportation, resource production and volume reduction of the marine wastes by installing the combined treatment system which is capable of directly treating the marine wastes at the ship. However, the above mentioned marine mobile combined treatment system is primarily directed to the collection, crushing and volume reduction at the ship, so an energy recycling operation cannot be performed, and heavy oil should be necessarily consumed as an energy supply source for the sake of operations of the ship. In the above invention, the resource recycling and energy efficiency optimization problems are not resolved.

In terms of the problems related to the electric power to the island regions, there are 74 island regions throughout the country where receive electric power by means of a self-electric power generation system using petroleum because electric power cannot be stably supplied to such island regions. The electric power supply to island regions costs a lot, and the installation of a low capacity electric power plant seems inefficient, so it needs to provide a means or an assistant means for the sake of stable electric power supply to the island regions.

The Korean Patent Registration No. 0766185 relates to "Floating combined cycle power plant" which is directed to generating electric power at a shop with the aid of means which help form water-sealing chambers by partitioning the interior of the ship which is movable on sea; however the technology related to "Floating combined cycle power plant" requires a liquefied natural gas or a liquefied fossil fuel such as heavy oil (Bunker-C oil), Orimulsion, etc. as an energy supply source for the sake of electric power generation, so it seems that the problems in the treatment and recycling of marine wastes are not resolved. Since the above mentioned technology has a means and object for the use as an emergency electric power supply source for electric power consumption place and in emergency, it is impossible to implement 24-hours sailing and operations.

The Korean Patent Publication No. 2010-0035196 relates to "Additional steam generator and steam super heater using hot cooling water from marine engines for power generation utilizing ship waste heat" which is directed ton apparatus for generating electric power by producing steam and supplying to a steam-based electric power generator set, the steam being used to drive the steam-based electric power generator by heat exchanging a condensed water with the steam-based electric power generator, the condensed water being preheated as it heat-exchanges with the engines of the ship; however the above technology cannot resolve the treatment and recycling issues of the marine wastes. Since the electric power generation method is based on the retrieval of waste heat, it still has problems in supplying enough electric power to the island regions.

As described above, in terms of the treatment and recycling methods of the marine wastes, it seems that the marine wastes can be directly treated and recycled without transporting them to the land. Since the marine wastes are generally stacked at a certain spot of the shore owing to their gathering features, it needs to dispose all the marine wastes through the sailing routines at the sea. In terms of the energy supply for sailing, it urgently needs to plan a comprehensive treatment and application method for marine wastes in comprehensive and diverse ways for the sake of the use of the marine wastes, the accumulation of electric power when the ship sails and an electric power supply in island regions.

### Disclosure of the Invention

Accordingly, the present invention is made so as to resolve the above mentioned problems. The present invention is basically directed to two matters: the treatment and recycling of marine wastes and the energy generation. First of all, in terms of the treatment of the marine wastes, the marine wastes stacked at each shore are not treated in the incineration facility or the recycling facility after they are transported through the land, but are collected and treated at each place where the marine wastes are, so it is possible to save costs which used to occur when the marine wastes are transported through the land. The above mentioned method is circulative, and it is possible to save more land transportation costs by recollecting the marine wastes from another shore regions through the sea.

Second of all, in terms of the recycling or energy generation using the marine wastes, in order to resolve the problems occurring as the marine wastes are generally incinerated or buried on lands while maintaining the advantages in the high calories and better recycling, the system mounted on the ship of the present invention provides a multiple purpose marine waste treatment and energy generation ship, which helps supply electric power to the island regions using marine wastes, comprising a preprocessing system for the treatment of marine wastes, a driving force energy source utilizing apparatus of a ship based on a non-pollution incineration of marine wastes, and an electric power generator. The present invention can resolve the incineration problems on land, the space acquisition problem for burial and the secondary environment problems due to the soil pollutions. The present invention can also resolve the energy lacking problems in island regions by supplying electric power energy as a high level energy source in the island regions where are isolated from the electric power supply where used to suffer from the supply of electric power.

In terms of the detailed features on the maximum increase in the use of energy, the driving force energy used for the transportation of the marine wastes stacked at other regions can be supplied from the conventional marine wastes, and in the island regions where need electric power, the electric power can be generated from the accumulated electric power and the incineration of the marine wastes in the ship.

To achieve the above objects, there is provided a ship for processing marine waste into resource for collecting marine waste at sea, preprocessing, and supplying power to island regions, comprising:

A) a collecting device which is configured to collect marine wastes collected on land or at sea in a port where a ship is anchoring, into the interior of the ship or to collect marine wastes deposited at the seafloor into the ship while the ship is sailing;

B) a first bunker which is a storing tank for storing the marine wastes collected by the collecting device and is configured to first eliminate seawater and impurities that the marine wastes have;

C) a crushing device which is configured to crush the marine wastes collected in the first bunker;

D) a sorting device which is configured to sort the crushed marine wastes by properties and shapes which passed through the crushing device;

E) a sorted thing storing tank which is configured to store depending on properties and shapes the sorted things sorted by the sorting device;

F) a drying device which is configured to second eliminate the water contained in the sorted combustible things of the sorted thing storing tank;

G) a second bunker which is configured to store the sorted combustible things dried by the drying device;

H) a first crane which is configured to input the sorted combustible things collected at the second bunker into an incineration furnace;

I) an incineration furnace which is configured to incinerate the sorted combustible things which are transferred from the second bunker through the first crane and are inputted for thereby producing heat energy source;

J) a boiler which is configured to use the heat energy source generated through the incineration furnace for the sake of electric power generation;

K) an ash treatment device which is configured to collect and treat the ash of the sorted combustible things incinerated by the incineration furnace;

L) an electric power generator which is configured to generate electric power by collecting the waste heat of the boiler;

M) an electric power transmission device which is configured to transmit electric power by connecting the electric power generated by the electric power generator to a submarine cable installed in island regions; and

N) an assistant driving force device which is configured to supply electric power when a ship starts sailing and to supply it as an assistant driving force.

In the present invention, the first bunker comprises a water dropping section disposed at the lower most portion of the bunker so as to collect seawater and first eliminate seawater components contained in marine wastes; a filtering layer which is formed at the top of the water dropping section and is formed of a rock layer, a gravel layer and a sand layer which are configured to filter impurities contained in the seawater; a marine waste storing layer which is provided at the top of the filtering layer and stores the marine wastes; and a water treatment unit which is configured to purify seawater collected at the water dropping section and impurities and discharge to sea or feedbacks the purified treatment water to the top of the storing layer for thereby enhancing the impurities elimination efficiency of the marine waste.

In the present invention, the sorting unit comprises a metal sorting device which sorts out metals contained in the marine waste, and a nonferrous sorting device which sorts out nonferrous metals.

In addition, in the present invention, the sorted thing storing tank comprises a sorted metal storing tank, a sorted nonferrous metal storing tank and a sorted combustible thing storing tank which are all configured to store the sorted things depending on properties and shapes.

In the present invention, the first crane comprises pole frames which are provided at the opposite positions in forward, backward, leftward and rightward directions in the second bunker and the incineration furnace and are fixed in the interiors of the second bunker and the incineration furnace; support frames which are arranged in the leftward and rightward directions of the pole frame and are positioned at both ends of each pole frame positioned in the forward and backward directions; upper and lower transfer device which are arranged at both ends of each support frame and connects the support frames to be supported by the pole frames and transfer upward and downward the support frames; transfer frames which are horizontally arranged at the front sides of the pole frames wherein their both ends are positioned at the lower side of each support frame and are open in the direction from the second bunker to the incineration furnace and move toward the interconnected position; forward and backward transfer device which are disposed at the tops of both ends in leftward and rightward directions of the transfer fame and connect the transfer frame to be supported by the support frames and transfer the transfer frames forward and backward; a bucket body which is disposed at a lower side of the transfer frame and is held by the operations of the bucket operation device for a heavy thing to be transferred; a leftward and rightward transfer device which is disposed at the top of the bucket body and connects the bucket body and the bucket operation device to be supported by the transfer frame and transfers the bucket body in leftward and rightward directions; and a connection frame which is disposed between the second bunker and the incineration furnace and is connected to the transfer frame disposed in the interior of the second bunker and the incineration furnace, so the bucket body can transfer a heavy thing while moving between the second bucker and the incineration furnace.

In addition, the incineration furnace is configured to incinerate a stoker method of a horizontal grate type.

Meanwhile, in the present invention, the ash treatment device comprises an ash cooling water, a wet chain conveyor and an ash storing tank configured to store ash, and the wet chain conveyor includes a gate type valve at an inlet and an outlet of the wet chain conveyor for the purpose of transferring the ash at the end portions of the incineration furnace to the ash storing tank through the ash cooling water, and the ash treatment device comprises an ash cooling water, a wet chain conveyor and an ash storing tank, and the inlet which the ash at the end portion of the incineration furnace enters is formed of an ash dropping prevention unit, and the depth from the end portion of the incineration furnace to the ash cooling water is 3 to 6 times the depth of the ash cooling water, and the wet chain conveyor includes a support for easily transferring ash on the surface of the belt, and the inclination of the wet chain conveyor is 30 to 45 degrees with respect to the surface of the ash cooling water from the ash cooling water to the end portion of the as storing tank.

In the present invention, the boiler operates with a steam temperature of 300 to 400°C and a steam pressure of 30 to 50bar, and the material of the steam pipe of the boiler is a stainless steel, and there is provided a pure water producing unit for supplying pure water when supplying a make-up water to the boiler.

In the present invention, the electric power generation unit is an electric power generating unit which uses a turbine by collecting the waste heat of the boiler and is an electric power generation unit which is configured to supply electric power to the sailing of a ship or island regions, the electric power being 60 to 70% of the electric power generated based on a daily treatment amount of the sorted combustible things, and there is provided an electric power supply control unit for controlling the supply of electric power depending on the purpose of an electric power supply to the sailing of the ship and or island regions.

In addition, the electric power transmission unit comprises a rectifier for rectifying the electric power generated by the electric power generator into AC forms which are required in the island regions for thereby supplying AC power.

### Advantageous effects

The present invention does not need a land transportation which is necessary for the sake of treatment of marine wastes staked at shores and has great effects on basically preventing the environmental problems which used to occur in the course of collections and transportation of marine wastes.

The marine wastes used to be buried on land after they are collected in the conventional art, which causes problems in obtaining a burial land and causes secondary environment problems in the pollution of soil, which can be basically overcome by the present invention, and the present invention is advantageous to generate energy by way of the incineration using the good heating generation performances that the marine wastes have in the conventional art.

The costs involved in the use of fuel oil when the ship sails can be greatly saved in such a way to use the converted energy for the sake of the sailing of the ship to the place where the marine wastes are stacked, and the energy source converted from marine wastes is a high level energy and is supplied to the island regions and shores, so it is possible to save the costs required for the installation of the electric power facilities and to resolve the unbalancing problems in energy.

### Brief Description of the Drawings

Figure 1 is a view illustrating an embodiment of a marine waste-based resource production treatment ship according to the present invention.

Figure 2 is a detailed view of another embodiment of a marine waste-based resource production treatment ship according to the present invention.

Figure 3 is a view illustrating a structure of a first bunker employed in the present invention.

Figure 4 is a perspective view illustrating a first crane as one embodiment of the present invention.

Figure 5 is a cross sectional view illustrating an ash treatment device.

Figure 6 is a view illustrating an electric power transmission device and its use of the present invention.

Figure 7 is a view illustrating an engaged state in which to transmit electric power as an electric power transmission cable is connected to an electric power transmission and receiving connecting unit of an electric power receiving device.

***Legend of Reference Numerals of Key Elements***

| | |
|---|---|
| 1: a ship for processing marine waste into resource | 10: marine waste collecting unit |
| 20: first bunker | 21: water dropping section |
| 22: filtering layer | 22-a: rock layer |
| 22-b: gravel layer | 22-c: sand layer |
| 23: marine waste layer | 24: water treatment device storing |
| 25: waste oil storing tank | 30: crushing device |
| 40: sorting device | 41: metal sorting device |
| 42: nonferrous metal device | 50: sorted thing storing sorting tank |
| 51: sorted metal storing tank | 52: sorted nonferrous metal storing tank |
| 53: sorted combustible thing storing tank | 60: drying device |
| 70: second bunker | 80: first crane |
| 811: pole frame | 812: pole rail |
| 821: pole frame | 822: support rail |
| 823: upper and lower transfer device | 824: upper and lower transfer body |
| 825: upper and lower transfer wheels | 826: upper and lower transfer motor |
| 830: transfer unit | 831: transfer frame |
| 832: transfer rail | 833: forward and backward transfer device |
| 834: forward and backward transfer body | 835: forward and backward transfer wheels |
| 836: forward and backward transfer motor | 840: bucket unit |
| 841: bucket body | 842: bucket operation device |
| 843: leftward and rightward transfer device | 844: leftward and rightward transfer body |
| 845: leftward and rightward transfer wheels | |
| 846: leftward and rightward transfer motor | |
| 90: incineration furnace | 100: boiler |
| 110: ash treatment device | 111: end portion of incineration furnace |
| 112: wet chain conveyer | 113: ash storing tank |
| 114: ash cooling water | 115: dropping adjusting unit |
| 116: support unit | 120: electric power generator |
| 130: electric power transmission device | |
| 131: electric power transmission cable | |
| 132: rectifier | 133: extension crane |
| 134: electric power transmission and receiving connecting unit of electric power transmission device | |
| 140: assistant driving force device | |
| 150: electric power receiving | device |
| 151: electric power transmission and receiving connecting unit of electric power receiving device | |
| 152: electric power receiving cable | |

### Best modes for carrying out the invention

The present invention will be described with reference to the accompanying drawings so that those who skilled in the art can easily and repeatedly implement the present invention.

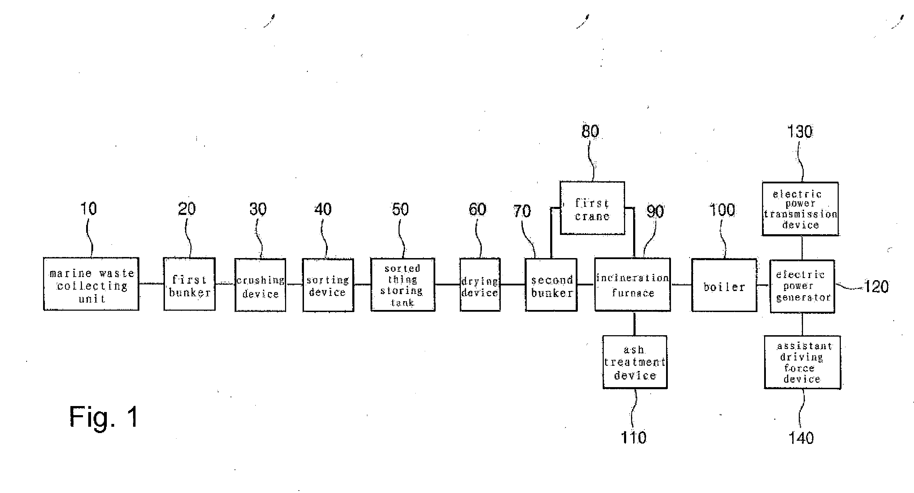

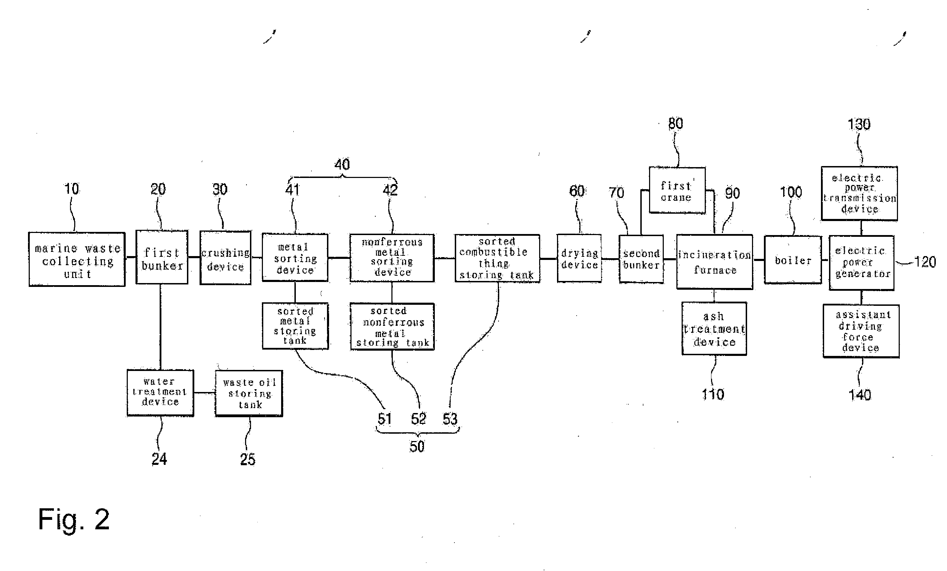

Figure 1 is a view illustrating an embodiment of a marine waste-based resource production treatment ship according to the present invention. Figure 2 is a detailed view of another embodiment of a marine waste-based resource production treatment ship according to the present invention.

As shown in Figures 1 and 2, the ship for processing marine waste into resource for collecting marine waste at sea, preprocessing, and supplying power to island regions, comprising A) a collecting device 10 which is configured to collect marine wastes collected on land or at sea in a port where a ship is anchoring, into the interior of the ship or to collect marine wastes deposited at the seafloor into the ship while the shop is sailing; B) a first bunker 20 which is a storing tank for storing the marine wastes collected by the collecting device and is configured to first eliminate seawater and impurities that the marine wastes have; C) a crushing device 30 which is configured to crush the marine wastes collected in the first bunker; D) a sorting device 40 which is configured to sort the crushed marine wastes by properties and shapes which passed through the crushing device; E) a sorted thing storing tank 50 which is configured to store depending on properties and shapes the sorted things sorted by the sorting device; F) a drying device 60 which is configured to second eliminate the water contained in the sorted combustible things of the sorted thing storing tank; G) a second bunker 70 which is configured to store the sorted combustible things dried by the drying device; H) a first crane 80 which is configured to input the sorted combustible things collected at the second bunker into an incineration furnace; I) an incineration furnace 90 which is configured to incinerate the sorted combustible things which are transferred from the second bunker through the first crane and are inputted for thereby producing heat energy source; J) a boiler 100 which is configured to use the heat energy source generated through the incineration furnace for the sake of electric power generation; K) an ash treatment device 110 which is configured to collect and treat the ash of the sorted combustible things incinerated by the incineration furnace; L) an electric power generator 120 which is configured to generate electric power by collecting the waste heat of the boiler; M) an electric power transmission device 130 which is configured to transmit electric power by connecting the electric power generated by the electric power generator to a submarine cable installed in island regions; and N) an assistant driving force device 140 which is configured to supply electric power when a ship starts sailing and to supply it as an assistant driving force.

A) The marine waste collecting unit 10 is directed to a collecting device which is configured to collect the marine wastes grouped on land or at sea while a ship is anchoring, into the ship or to collect the marine wastes, which are deposited at the seafloor, while the ship is sailing. The above mentioned collecting device is provided in the ship, and various kinds of collecting device can be used even when they are configured to collect marine wastes.

An embodiment of the marine waste collecting unit according to the present invention is directed to a collecting device which is capable of collecting marine wastes grouped on land or at sea while a ship is anchoring into the interior of the ship. A bucket crane or a fork crane can be provided in the ship for the sake of collecting marine wastes. The conventional art used to utilize a diver or a collecting crane which is installed at a port when it needs to collect marine wastes within the port. Using the diver is not proper because the collecting amount of marine wastes is small. It is preferred that the marine waste collecting unit is mounted at the ship rather than to install it at the port, so even when the ship is moved to another shore, the ship can directly collect the marine wastes, which results in saving time and costs when collecting the marine wastes. In addition, it is possible to save financial burden and costs as compared to when installing it at each port. So, it is preferred to install at the ship.

The marine waste collecting unit according to another embodiment of the present invention is directed to a collecting unit which is configured to collect the marine wastes, which are deposited at the seafloor, into the interior of the ship as the ship is sailing. The collecting of marine wastes is conducted by installing a near-shore and offshore deposited waste collecting unit which adapts a hook and a winch. The collecting unit with a hook mounts a hook-shaped device at the stern of a ship for thereby scraping and collecting the near-shore and offshore deposited wastes and bringing the marine wastes up using the winch. The present invention is directed to an apparatus which is capable of collecting the marine wastes which are deposited at the seafloor into the ship while the ship is sailing. It is obvious that all kinds of collecting unit which employs a hook or is formed in a net mesh structure are included in the scope of the present invention.

B) The first bunker 20 is a storing tank which is capable of storing a marine component transferred by the marine waste collecting unit and is directed to first eliminating the marine components that the transferred marine wastes have. In case of the marine wastes, it contains plenty of other contamination substances. So, it needs to eliminate the first stage seawater and contaminated substances with the aid of gravity and pores through the first bunker for the sake of efficient crushing, sorting and drying in the preprocessing processes of the following crushing, sorting and drying processes. In order to extend service life of the machines which are employed in the following preprocessing processes, it is preferred that there is provided a first bunker for the purpose of eliminating seawater components which contain salty components and contaminated substances.

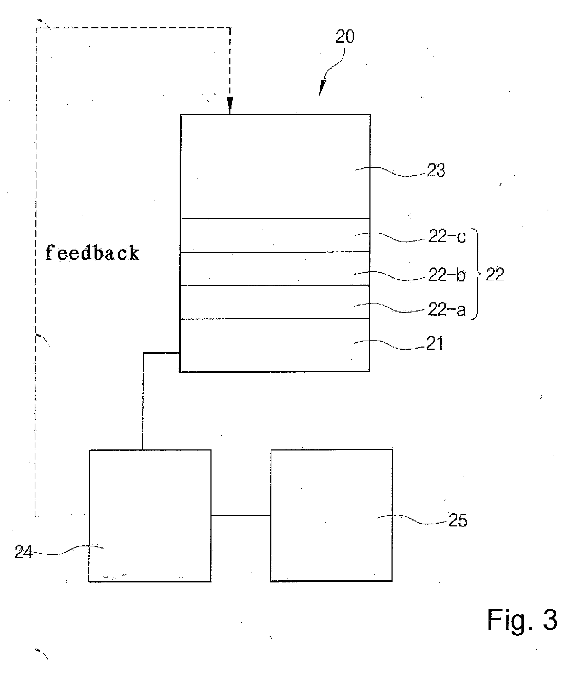

Figure 3 is a view illustrating a structure of the first bunker 20 employed in the present invention. As shown in Figure 3, the first bunker which is employed so as to eliminate the salty components and contaminated substances belonging to the marine wastes comprises a water dropping section 21 which is formed at the lower most potion of the bunker for collecting seawater, a filtering layer 22 which is provided at the top of the water dropping section and is formed of a rock layer 22-a, a gravel layer 22-b, and a sand layer 22-c, and a marine waste storing layer 23 which is formed at the top of the filtering layer and stores the marine wastes. In the structure of the first bunker, as the construction of the filtering layer configured to filter impurities, the rock layer, the gravel layer and the sand layer are one example, and various kinds of filtering layers can be formed. It is technically preferred to have the above mentioned structure which uses the gravity and porosity in the way that the above mentioned construction has advantages in terms of costs while greatly reducing the workloads of the water treatment device 24 which is provided to purify seawater containing contaminated substances collected in the water dropping section of the first bunker.

It is preferred that the first bunker further comprises a water treatment device 24 which is configured to purify the seawater containing the contaminated substances collected at the water dropping section of the first bunker and to discharge to the sea. Here, the water treatment device 24 is capable of eliminating oil and oily components contained in the dropping water collected at the water dropping section of the first bunker and storing them in the waste oil storing tank 25 and discharging only seawater. There may be a feedback construction in which the seawater can be supplied to the top of the marine waste storing layer 23 of the first bunker after the concentration of the seawater is lowered, for thereby continuously supplying freshwater.

The water treatment device 24 may employ a water treatment device such as a reverse osmosis membrane, a hollow fiber membrane, a ultra filter, etc. depending on the kinds of the contaminated substance which will be eliminated. When the water treatment device which is capable of obtaining the minimum amount of salty components as salt is eliminated is used, at least one between the ultra filter and the reverse osmosis membrane or both can be formed in a multiple layer structure. In case of the reverse osmosis membrane, since ionic substances can be eliminated, it is proper for the desalting of seawater or for the manufacture of ultra pure water. The treated water is not discharged to sea through the water treatment device, but the treated water filtered through the water treating device is processed in relation with the freshwater providing device, so it is possible to enhance the work efficiency with the aid of the feedback of a continuous contaminant elimination and freshwater supply. Here, the first bunker may comprises a device (not shown) for providing freshwater so as to obtain a reliable removal of the salt and contaminant from seawater. There may be further provided a device (no shown) so that freshwater or seawater with a low concentration can be inputted continuously or with time interval from the water treatment unit at the top of the first bunker for thereby eliminating salty components and contaminants. More preferably, it may be just placed in the bunker for a certain time for thereby removing moisture and impurities.

The marine wastes from which salty components and other contaminants are removed in the marine waste storing layer of the first layer is processed through the preprocessing step. The preprocessing step is formed of crushing, sorting and drying procedures.

C) The crushing device 30 may be formed of an enveloping and crushing device which is used for the preprocessing of life wastes and buried wastes. It is preferred to use an apparatus which is capable of cutting and crushing the tangled wastes such as a net among the marine wastes. As an apparatus with a cutting and crushing function, it may be formed of an integrated enveloping and crushing device which can be employed for the sake of the preprocessing process MT process) of the life wastes or the buried wastes. The crushed marine wastes which are processed through the crushing device are enforced to pass through the sorting device for the sake of separation and sorting depending on properties and shapes.

D) The sorting device 40 can be selected depending on the distributions by properties and shapes of the marine wastes. In case of the marine wastes, the marine wastes which are collected from the seafloor of shore contain lots of metallic components and in case of the collected marine wastes floating on the surface of the near-shore and offshore and in case of the wastes on lands, they are mainly formed of plastic substances and Styrofoam, so the sorting device can be selected in consideration of its capacity. As shown in Figure 2, it is preferably formed of a metal sorting device 41, a nonferrous metal sorting device 42. According to the situation, it may be formed of a screen sorting device, a wind power-based sorting device, a near infrared optical sorting device, etc.

Here, the metal sorting device 41 and the nonferrous sorting device 42 are configured to sort the metals and nonferrous metals contained in marine wastes and prevents them from entering the incineration furnace for thereby obtaining a reliable incineration and protecting the incineration furnace. The sorted metals and nonferrous metals can be used for the sake of recycling of the resources on land.

The metal sorting device 41 is directed to separating metals using the device equipped with a magnetic force generation function. The nonferrous metal sorting device 42 is directed to sorting out wooden materials, foods, incombustible materials from nonferrous metals having high viscosity. It is preferred to use an eddy current type nonferrous metal device in which a high sped current frequency of a magnetic field generates a strong eddy current in a nonferrous metallic material by which to generate magnetic fields having repulsive effects with respect to the external magnetic field for thereby separating nonferrous metals.

As a sorting device which can be used as an auxiliary sorting device, a screen sorting device (not shown) may be used. The screen sorting device may be a Trommel sorting device or a disk screen. The screen sorting device and the disk screen are configured to sort out based on the difference in grain size. The Trommel screen sorts out a biodegradable substance contained in the crushed marine waste. In the grain size-based sorting, it is most usually used because the sorting can be performed depending on a desired size based on the size and shape of the mesh. The disk screen is capable of sorting light substances by an agitating operation of the disk. It is easy to sort out biodegradable substances, and less blocking phenomenon occurs with the aid of rotational forces of the disk; however when the thickness of the layer of the entering marine wastes grows, the sorting efficiency lowers. Therefore, it needs to reduce the volume of the loading marine wastes after they are first sorted, for thereby enhancing the sorting efficiency of the biodegradable substances.

The wind force-based sorting device (not shown) which can be used as an assistant sorting device is directed to sorting out combustible substances such as fiber, rubber/leather/plastic materials based on the difference in density. It is the second object to reduce the loading burden of the drying device by enhancing the naturally drying performance of the wastes. The internal circulative wind force sorting work has a structure for the purpose of re-circulating extraction air, for thereby preventing an external discharge of flying materials, and less number of mechanical devices are used, so maintenance is easy.

The near infrared ray optical sorting device (not shown) which can be used as an assistant sorting device is directed to a device for instantly spraying compressed air and sorting out when the target objects are classified and positioned at the air nozzle by scanning the properties of the substances which are selected and sorted based on the reflected near infrared ray waveforms. The classifications by materials (PE, PS, PET, PVC, etc) of plastic materials can be possible as the system is properly set; however in terms of the combustion of marine wastes, PVC which is known to help generate Dioxine is separate and eliminated.

As a preprocessing device employed in the present invention, the substances sorted out depending on the selection of each device can be sorted out into incombustible substances and combustible substances at each stage and can be stored, and the sorted thing storing tank 50 preferably comprises a sorted metal storing tank 51, a sorted nonferrous metal sorting tank 52 and a sorted combustible thing storing tank 53.

The combustible substances sorted out by the sorted combustible thing storing tank 53 of the substances sorted and stored by the sorting device are forced to pass through the drying device 60 so as to second eliminate the moisture contained in the combustible things in the process before the incineration. At this time, there may be further provided a combustible thing crushing device (not shown) before the drying device, if necessary, for thereby enhancing the drying efficiency.

The drying device is a device for drying combustible things. There may be provided a drying furnace, a combustion furnace (not shown) configured to supply heated air of 350°C, and a dried combustible thing storing tank (not shown) which is configured to previously store the dried combustible things before they are inputted into the second bunker 70. The marine wastes as combustible things for the sake of drying are quantitatively supplied by means of the input conveyor of the drying device, and the moisture content of the combustible things can be adjusted by way of the speed control of the drying device and the temperature control of the inlet and outlet of the drying device. The combustible substances which passed through the drying device are moved to the second bunker before they are inputted into the incineration furnace.

G) The second bunker 70 is provided for eliminating even small moisture with the aid of heat before the combustible things sorted by the preprocessing device are inputted into the incineration furnace and for performing a buffering operation as a place where to properly collect them using the crane before they are moved to the incineration furnace.

H) The first crane 80 is a device for inputting the combustible things collected in the second bunker into the incineration furnace. The first crane may be an integrated crane for the purpose of inputting sorted combustible substances into the incineration furnace as the combustible substances of the second bunker. It is preferred that the first crane is a crane which is equipped with a bucket; however since the incineration is performed while the ship is sailing, the crane equipped with a bucket employed in the present invention helps input the combustible substances into the incineration furnace through the first crane while the ship is sailing for the sake of incineration. So, it needs to resolve some problems which used to happen in the past due to the impact on the inner wall and the collision between devices in the course of input of the wastes for the rolling reasons of the bucket when it is windy or there are waves. For this, the first crane comprises a pole frame which is installed at an inner corner portion of the space of each of the second bunker and the incineration furnace, a support frame which is connected to both ends of the pole frame and is movable upward and downward, a transfer frame which is interconnected to the support frame and is to move forward and backward the support frame, a bucket body which is positioned at the transfer frame and is movable leftward and rightward, and a connection frame which interconnects the transfer frame disposed at the first bunker and the incineration furnace and allows the bucket body to move between the first bunker and the incineration furnace.

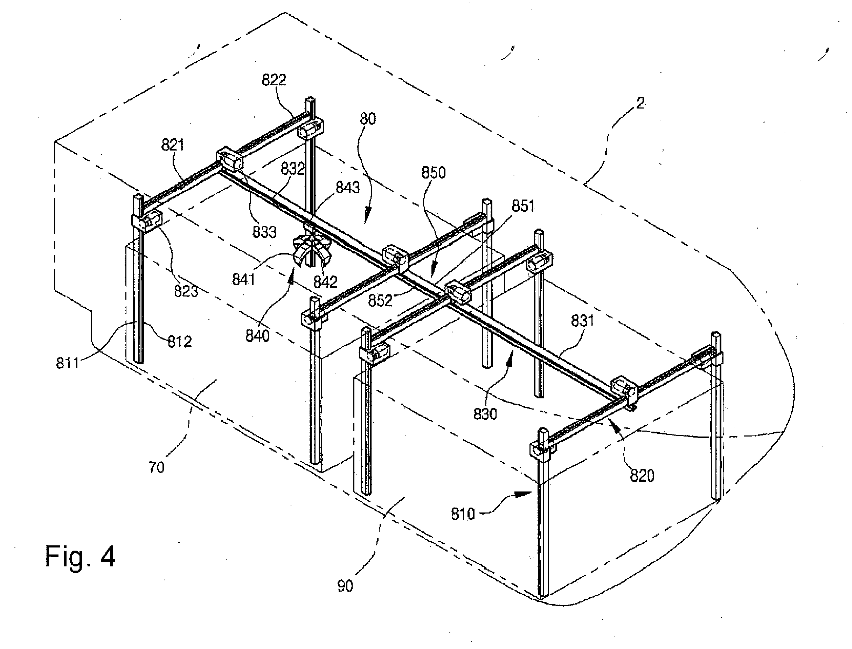

Figure 4 is a perspective view illustrating a first crane according to an embodiment of the present invention. As shown in Figure 4, the first crane comprises pole frames 811 which are disposed at the opposite positions in forward, backward, leftward and rightward directions in the interiors of the second bunker and the incineration furnace and are fixed in the interiors of the second bunker and the incineration furnace; pole frames 821 which are disposed in the leftward and rightward directions of each pole frame and are positioned at both ends of each pole frame positioned in the forward and backward directions; an upper and lower transfer device 823 which is disposed at both ends in the forward and backward direction of the support frame and connect the support frame to be supported by the pole frames and upwardly and downwardly transfers the support frames; transfer frames 831 which are disposed crossing the front surface of the pole frame wherein their both ends are positioned at the lower side of each support frame positioned in the leftward and rightward directions, and which are disposed at the positions crossing the inner sides of the second bunker and the incineration furnace in the leftward and rightward directions; a forward and backward transfer device 833 which is disposed at the top of both ends in the leftward and rightward directions of the transfer frame and connect the transfer frame to be supported by the support frame and transfer forwardly and backwardly the transfer frame; a bucket body 841 which is disposed at a lower side of the transfer frame and is held by the operations of the bucket operation unit for a heavy thing to be transferred; a leftward and rightward transfer device 843 which is disposed at the top of the bucket body and connects the bucket body and the bucket operation unit to be supported by the transfer frame and transfers the bucket body in leftward and rightward directions; and a connection frame 851 which is disposed between the second bunker and the incineration furnace and is connected to the transfer frame disposed in the interior of the second bunker and the incineration furnace, so the bucket body can transfer a heavy thing while moving between the second bucker and the incineration furnace.

In the pole frame811 is provided a pole rail 812 which guides the support frame 821 to transfer in upward and downward directions, and in the support frame 821 is provided a support rail 822 which guide the transfer frame 831 to transfer in forward and backward directions, and in the transfer frame 831 is provided a transfer rail 832 which guides the bucket body 841 to transfer leftward and rightward directions. In the connection frame 851, a connection rail 852 is installed at a position where is connected to the transfer rail 832 as the transfer frame 831 disposed at the second bunker 70 and the incineration furnace 90 moves in upward, downward, leftward and rightward directions, so the bucket body 841 can move in leftward and rightward directions and can be transferred between the second bunker 70 and the incineration furnace 90.

The bucket body 841 is made of a combustible material in a state that it is positioned at the second bunker 70 and collects the sorted combustible materials while it moves in upward, downward, leftward and rightward directions with the aid of the upper and lower transfer device 823 installed at the second bunker 70, the forward and backward transfer device 833 and the leftward and rightward transfer device 843, and it moves to the connection frame 851 in a state that it holds the materials. The bucket body 841 transfers in the upward, downward, leftward and rightward directions with the aid of the upper and lower transfer device 823 installed at the incineration furnace 90, the forward and backward transfer device 833 and the leftward and rightward transfer device 843 in state that the bucket body 841 is transferred to the incineration furnace 90 along the transfer frame 831 installed at the incineration furnace 90 by means of the operation of the leftward and rightward transfer device 843, so the sorted combustible things collected at the bucket body 841 are supplied to the incineration furnace 90. After the sorted combustible things are supplied to the incineration furnace 90, the bucket body 841 is again moved to the second bucker 70, so the transfer work of the sorted combustible things can be repeatedly performed.

The first crane according to an embodiment of the present invention has features in that there is not swing even when the ship swings, so it is possible to safely input the sorted combustible things into the incineration furnace. Any collision with the second bunker and the devices of the incineration furnace can be prevented for thereby obtaining a protection of the machines and a safe process. The first crane is preferably mounted in relation with the first bunker and the incineration furnace. There might be further provided a connection frame which can be used in relation with the input of the sorted combustible materials collected from the first bunker through the bucket body into the incineration furnace.

I) The incineration furnace 90 is a device for generating a heat energy source by incinerating the sorted combustible things which are transferred and inputted from the second bunker 70 through the first crane 80. It is preferred to use a stocker type incineration method. As the incineration method, besides the stoker method, there are a fluidized bed method and a rotary Kiln method and a thermal decomposition method, among which any one can be employed for the sake of stable incineration even when the ship swings in the present invention. It is preferred to use the stoker method. Meanwhile, in the stoker method, various types such as horizontal type, step types, roller types, etc can be used depending on the kinds of grates. It is most preferred to use the horizontal type grate for the sake of safe process.

K) The boiler 100 is configured to use the heat energy source generated through the incineration furnace 90 for the sake of electric power which can be used for the sailing of the ship and can be supplied to the island regions. It is preferred that the steam temperature is 300 to 400°C, and it is more preferred that the steam temperature is 340 to 360°C, and it is much more preferred that the steam temperature is 345 to 350°C. When the steam temperature is above 400°C, the over load continues in the operations of the boiler, which results in shortening service life of the boiler. So, it needs to limit to specific values. It is preferred that the system operates while maintaining the steam pressure of the boiler at 30 to 50bar. The release of the steam pressure with respect to the heating value using the marine wastes becomes easy within the scope of configures. In terms of the electric power generation using the electric power generator, it is preferred to limit the scope of the configures in the way that the electric power generator can be protected, and the efficiency of the electric power generation can be enhanced. In addition, the fluid pipes of the boiler are preferably made of stainless steels so as to prevent the corrosion of the boiler, not limiting such construction. That is, it is obvious for those who skilled in the art to use stainless steel or its alloy and iron and nonferrous metals and their alloys and all kinds of metals which can prevent corrosion.

It is preferred that the boiler is supplied with a make-up water supplied through a pure water producing unit for the sake of make-up water supply to the boiler. When seawater is directly used, the service life of the boiler may be shortened due to salt contained in seawater. The pure water producing unit may use a typically used pure water producing unit. The make-up water supplied through the pure water producing unit has great effects on preventing the corrosion of the boiler and other elements.

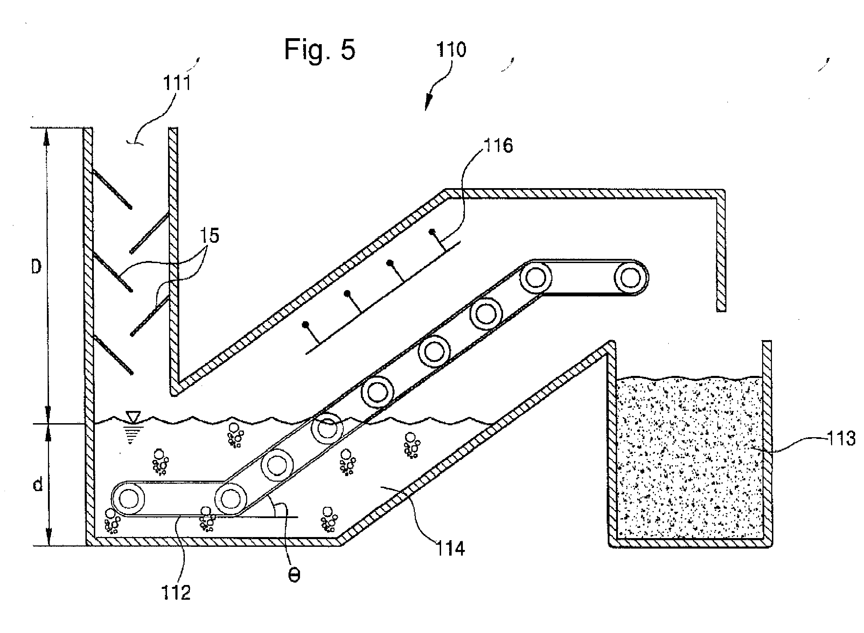

Figure 5 is a cross sectional view illustrating an ash treatment device. As shown therein, J) the ash treatment device 110 is a device for collecting and storing the ash of the sorted combustible materials incinerated through the incineration furnace 90. The common ash treatment method has features in that ash drops from the end portion 111 of the incineration furnace, and is transferred to the ash storing tank 113 by means of the wet chain conveyor 112. Here, the wet chain conveyor serves to cool down the ash because it is submerged in the ash cooling water 14. The ash treatment device employed in the present invention needs to prevent the input of the ash cooling water into the incineration furnace or the ash storing tank as the ship swings. For this, the present invention employs an ash treatment device which is equipped with a gate type valve at the inlet and the outlet of the wet chain conveyor for thereby preventing the inputs of the ash cooling water into the incineration furnace or the ash storing tank. Meanwhile, more preferably, the ash treatment device comprises an ash cooling water 114, a wet chain conveyor 112 and an ash storing tank 113 which stores ash. Here, the entering unit helping for the ash of the end portion 111 of the incineration furnace to enter the ash cooling water includes an ash dropping adjusting unit 115. The depth "D" from the end of the incineration furnace to the ash cooling water is 3 to 6 times the depth "d" of the ash cooling water. The wet chain conveyor 112 includes a support unit 116 for easily transferring the ash on the surface of the belt. It is preferred that the inclination θ of the wet chain conveyor is 30 to 40 degrees with respect to the surface of the ash cooling water from the ash cooling water to the end portion of the ash storing tank. The dropping adjusting unit is configured to limit the damping of the cooing water when ash drops from the end portion of the incineration furnace for thereby preventing the entering of the cooling water into the incineration furnace while performing a buffering operation so as to continuously supply ash. In addition, the support unit 116 is installed with a certain inclination at the surface of the wet chain conveyor for thereby efficiently transferring the ash which is transferred to the ash storing tank. As one of the key features of the present invention, the ash treatment device according to an embodiment of the present invention is directed to preventing the entering of the cooling water into the incineration furnace or the ash storing tank when the ship swings while the ship is sailing and is directed to providing a construction which is proper to cool down the ash and to store it.

L)The electric power generator 120 is directed to generating electric power using a turbine in the method of generating electric power with the steam generating from the boiler 110. Average amount of the marine wastes which can be combusted per day is about 50 tons, so it is possible to generate about 1-2 Mwh electric power using the incineration furnace which is computed based on the processing capacity of 50 tons/day. At this time, 300 to 400Kwh of the generated electric power is used as the consumption electric power for the incineration furnace, and the remaining 600 to 700Kwh is used to drive the driving force device for the sake of the sailing of the ship by driving the electric motor when the ship is sailing. The surplus electric power may be accumulated in the battery; however in case of the accumulation of electric power, the transfer efficiency of electric power may lower, so it is preferred to adjust the amount of generating electric power by way of the control of the incinerating amount rather than the use of the battery device. Meanwhile, in case that electric power is supplied to the island regions when the ship is being anchored, 600 to 700Kwh of electric power can be all supplied to the island regions. In addition, the electric power generator further include an electric power supply control device which is capable of controlling the supply of electric power depending on the purpose of consumption in sailing and electric power supply to the island regions in relation with the use of 600 to 700Kwh.

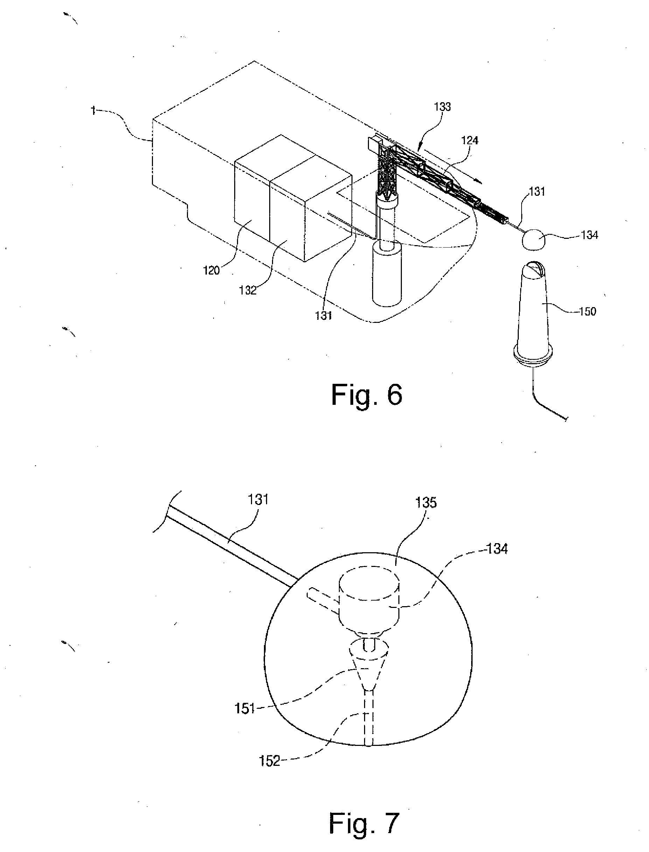

M) The electric power transmission device 130 is a device which includes an electric power transmission cable for transmitting electric power by connecting the electric power generated by the electric power generator to the submarine cable installed in the island regions. Figure 6 is a view illustrating the electric power transmission device and its use of the present invention. As shown in Figure 6, the electric power transmission cable 131 is connected to the electric power generator 120 and the rectifier 132, and the electric power transmission cable is fixed at the extension cable 133 which can prolong to the electric power receiving device 150 of the near shore of the island region outside the ship and is connected to the electric power receiving device. Figure 7 is a view illustrating a connected state that the electric power transmission cable is connected to the electric power transmission and receiving connecting unit of the electric power receiving device and becomes a state to transmit electric power. As shown in Figure 7, the electric power transmission and receiving connecting unit 134 of the electric power receiving device of the electric leakage prevention cover 135 preventing electric leakage is connected to the electric power transmission and receiving connecting unit 151 of the electric power receiving device for thereby transmitting electric power through the electric power receiving cable 152. In case that electric power is transmitted in a high voltage after it is connected to the electric power receiving device 150, there may be further provided a connection device for the sake of strong connection to the electric power receiving device for stable electric power supply. In consideration of the size of the ship of the present invention, the lighthouse type electric power receiving device is installed in the island regions, so it is possible to supply electric power to each island region through the connection between the electric power receiving device and the electric power transmission device of the ship and the submarine cable.

The electric power transmission device is equipped with only a type of an electric power transmission cable and pulls to the ship an electric power receiving cable of the electric power receiving device which is located at the near shore of the island region through the extended crane for thereby connecting in the ship and transmitting electric power. Figures 6 and 7 are views illustrating an embodiment that the electric power transmission cable is extended from the ship to the electric power receiving device of the near shore of the island region. As shown in Figures 6 and 7, the construction that the electric power receiving device and the electric power receiving cable of the near shore of the island region is pulled to the ship, so the electric power transmission and receiving parts are connected at the ship may be obvious to those who skilled in the art. The electric power transmission device makes it possible to directly supply electric power through the electric power receiving device installed at the near shore of the island region outside the ship as soon as electric power is generated by means of the continuous incineration of the marine wastes collected in the ship which is anchoring near the island region. Meanwhile, the electric power transmission device includes a rectifier 132 which converts the electric power generated by the electric power generator into AC which is required in the island regions for thereby supplying AC electric power.

In addition, the assistant driving force device 140 is provided for supplying assistant driving force when the ship starts sailing or when in emergency. When the ship stats sailing, lots of energy are required, and the electric power can be generated by way of the incineration of the marine wastes in the ship so as to supply energy which is required in the sailing, and the generated electric power is supplied as an energy for the sake of sailing; however the above mentioned operations are inefficient, so it is preferred to use the assistant driving force device which is formed of a diesel engine using heavy oil as an energy source used in a common ship for the sake of temporal sailing. In addition, in case that the ship keeps sailing with a constant speed, there may be provided an electric power conversion device which is configured to be proper to the electric power conversion and is capable of converting the electric power generated by the electric power generator into the driving force of the ship.

The present invention will be described in details with reference to the accompanying drawings.

<Embodiments>

Construction of Marine Waste-based Resource Production Ship system

The marine wastes are collected at the first bunker 20 of the present invention using a bucket crane as a marine waste transfer device which is installed at a shore or a port. In the present invention, the collecting unit 10 capable of collecting deposited wastes at near shore or offshore while the ship is sailing is mounted at the stern of the ship. The marine wastes are also collected into the first bunker 20 by means of the collecting unit 10. Salty components and impurities are frequently filtered from the marine wastes while the ship is anchoring at the port or is sailing and are collected at the first bunker. The marine wastes collected at the marine waste storing layer of the top of the first bunker are sorted and stored by way of the preprocessing procedures by the crushing device 30, the sorting device 40, and the drying device. The crushing unit 30 crushes the marine wastes in the preprocessing procedure (MT process) of common life wastes using the crushing elements. The crushed marine wastes are sequentially sorted by way of the metal sorting device and the nonferrous metal sorting device of the sorting device 40. The sorted combustible things are collected at the sorted combustible thing storing tank, and the moisture is fully removed from the sorted combustible things by way of the drying device 60, and the moisture free combustible things are collected at the second bunker 70. The sorted combustible things collected at the second bunker through the first crane 80 are inputted into the incineration furnace 90, and electric power can be generated by the electric power generator 120 which uses steam from the boiler 100.

Meanwhile, there may be further provided an assistant driving force supply device 140 which is used as a driving force source when in emergency. The assistant driving force device may be a device which provides driving force using the fuel which is generally used in the ship such as heavy oil, natural gas, etc.

The ash treatment device 110 is directed to collecting and storing the ash which remains after the marine wastes are combusted in the incineration furnace, and it is preferably positioned at the place opposite to the first bunker about the boiler. As the combustible things of the second bunker is incinerated, it is possible to balance the weight of the ship, which operations can be performed as an assistant function.

Figure 8 describes a resource production procedure depending on the stream flow of the marine wastes according to an embodiment of the present invention, and each position setting from the stem to the stern of the ship, and it is obvious that the position of the mounting of each device belongs to the substitution scope of the present invention by those who skilled in the art.

<Implementation Example>

As an embodiment of the present invention, the sorted combustible things sorted by the preprocessing device mean the combustible things prepared after the marine wastes are collected, and seawater is removed, and the marine wastes are crushed by the crushing device, and the metals or the nonferrous metals are removed. It is provided in a state that it can be inputted into the incineration furnace and is incinerated.

The sorted combustible things are obtained by preprocessing the marine wastes which are collected by the ship. The samples were collected at the short near Boryung City so as to analyze the properties and shapes of the marine wastes, and the analyzed materials are shown in Table 1.

**Table 1**

| | Metal and wire | Fishing net | Tree | plastic | Fiber and rope | Other (fish and shell) | sum |
|---|---|---|---|---|---|---|---|
| Property and shape ratio | 28% | 42.17% | 4.38% | 1.96% | 19.10% | 4.39% | 100% |

As seen in the data of Table 1 obtained by analyzing the properties and shapes, the test was conducted with respect to the heating value of the wastes based on the remaining properties and shapes except for the metal and wire sorted out from the sorted combustible things in the properties and shapes of the marine wastes and the measured heating value.

The analysis on the heating value of the marine wastes is divided into the actually measured value which is used for analyzing the heating value using the calorimeter and the calculation value using the values analyzed by the three component analysis method and the atom analysis method. The actually measured values and the calculation values are all obtained by the experiments.

In the three component analysis method, the heating values is calculated through the proximate analysis using the analyzed values after the moisture, ash and combustible things are analyzed. Here, the moisture is measured based on the difference in weights before and after the wastes are dried, and the ash is measured based on the difference in the weight before and after the ignition is performed, and the combustible things are measured with the remaining value after moisture and ash are subtracted from the whole sample weights. The following table 2 shows the values after the three components of the marine wastes from which the metals are sorted out are analyzed wherein the unit is %.

**Table 2**

| classification | | Fishing net | tree | plastic | Fiber and rope | other(fish and shell) | Marine wastes |
|---|---|---|---|---|---|---|---|
| Three components | Moisture | 1.06 | 9.44 | 1.44 | 7.84 | 3.05 | 2.73 |
| | Combustible things | 95.73 | 83.83 | 96.94 | 75.03 | 1.78 | 69.56 |
| | ash | 2.21 | 6.72 | 1.62 | 17.14 | 95.17 | 27.71 |
| | sum | 100 | 100 | 100 | 100 | 100 | 100 |

The atom analysis method can analyze in the unit of ppm in such a way that the dried samples are crushed into pieces, and the atoms contained are analyzed using an analyzing device. The ratios of C, H, O, N and S can be analyzed to the units of % by means of the automatic element analysis, and Cl can be analyzed to the unit of ppm based on the IC (Ion Chromatograph) by diluting it into the solution. The heating values can be calculated using the empirical formula (Dulong formula, Steuer formula, Scheure-Kestner formula) depending on the analyzed atom ratio. As seen in the following table 3, the atom components of the marine wastes from which the metallic components were sorted out by the above mentioned method are analyzed. At this time, the atom units are expressed in English for convenience, and Ci is calculated into % depending on its construction ratio, and the units are matched to %.

**Table 3**

| classification | | Fishing net | tree | plastic | Fiber and rope | other(fish and shell) | Marine wastes |
|---|---|---|---|---|---|---|---|
| Atom | C | 83.16 | 29.31 | 88.56 | 68.13 | 0.49 | 60.20 |
| analysis | H | 14.14 | 2.44 | 7.49 | 12.04 | 0.00 | 5.66 |
| | O | 0.40 | 59.57 | 2.18 | 1.01 | 1.34 | 5.33 |
| | N | 0.00 | 0.17 | 0.00 | 0.08 | 0.00 | 0.02 |
| | S | 0.00 | 0.00 | 0.00 | 0.00 | 0.00 | 0.00 |
| | Cl | 0.06 | 1.09 | 0.12 | 0.15 | 0.00 | 0.15 |
| | Ash | 2.23 | 7.42 | 1.65 | 18.59 | 98.16 | 228.65 |
| | sum | 100.00 | 100.00 | 100.00 | 100.00 | 100.00 | 100.00 |

In addition, when calculating the actual values using the calorimeter, the samples cut into pieces are mixed uniformly matching the properties and shapes which represent physical compositions, and the heating values are calculated using Boomb calorimeter. The thusly analyzed value is 5,428 kcal/kg.

The heating values of the marine wastes from which the above mentioned metals are removed are actually same as the sorted combustible things from which the metals are sorted out in the preprocessing device, and the heating values can be implemented by the above mentioned methods.

The tests with respect to the electric energy amount generated based on the heating value with reference to 5,428kcal/kg which is an actually measured value are performed for the sake of the heating value of the marine wastes except for the metals which are actually same as the sorted combustible things of the present invention.

For the marine wastes having the heating values of the actually measured values, the steams are produced using the boiler to obtain the production amount of steam under the following conditions shown in Table 4.

**Table 4**

| classification | | unit | Experiment 1 | Experiment 2 |
|---|---|---|---|---|
| Temperature at outlet of incineration furnace | | °C | 961.9 | 961.6 |
| Temperature at outlet of boiler | | °C | 200.0 | 200.0 |
| Steam | Temperature | °C | 203.4 | 300.0 |
| | Pressure | bar | 16.0 | 30.0 |
| | Enthalpy | kcal/kg | 667.1 | 715.1 |
| Steam production amount of boiler | | ton/hr | 16.45 | 15.09 |

As seen in Table 4, the experiments 1 and 2 are conducted, and the steams with different temperatures and pressures are produced for easily recognizing the differences of electric energy which is produced at the time of electric power generation.

The above experiment 1 shows that the steam with the temperature of 200°C and the pressure of 16bar is produced, and the experiment 2 shows that a high temperature and pressure steam with the temperature of 300°C and the pressure of 30bar is produced.

The electric power is generated using the electric power generator based on the conditions of Table 5 using the steam produced from the marine wastes based on the conditions of Table 4.

**Table 5**

| classification | unit | Experiment 1 | Experiment 2 |
|---|---|---|---|
| Total steam production amount | ton/hr | 16.45 | 15.09 |
| Steam pressure at outlet of turbine | bar | -0.75 | -0.75 |
| Enthalpy at outlet of turbine | kcal/kg | 540 | 540 |
| Turbine efficiency | % | 68 | 68 |
| Efficiency of electric power generator | % | 95 | 95 |
| Efficiency of decelerator | % | 98 | 98 |
| Electric power generation mount per hour | Mwh | 1.27 | 1.61 |
| Selection of turbine capacity | Mw | 1.66 | 2.10 |

As seen in the table 5, it seems that the electric power generation efficiency of the experiment 2 having the temperature and pressure both higher than the experiment 1 is high. So, it is preferred that the boiler 100 of the present invention is used with the steam temperature of 300 to 400°C and the steam pressure of 30 to 50bar.

As a result of the above implementations, it is possible to confirm the heating value of the marine wastes except for the metals and the electric energy based on the heating values, so the amount of electric power generation of the sorted combustible things sorted out in the interior of the ship can be actually confirmed.

It is possible to confirm that the electric energy can be produced according to the present invention depending on the heating values of the marine wastes from which the metals are removed, and the electric energy production amount based on the heating values.

### Industrial Applicability

The present invention is industrially advantageous in that the marine wastes which are floating at sea are directly collected while the ship is sailing, and the electric power generation using the collected marine wastes is converted into energy, so it is possible to resolve the secondary environment problems while generating energy. The present invention can be well applied to the industry which creates ne recycling energy while providing such technology.

## Claims

1. A ship for processing marine waste into resource for collecting marine waste at sea, preprocessing, comprising:
A) a collecting device which is configured to collect marine wastes collected on land or at sea in a port where a ship is anchoring, into the interior of the ship or to collect marine wastes deposited at the seafloor into the ship while the ship is sailing;
B) a first bunker which is a storing tank for storing the marine wastes collected by the collecting unit and is configured to first eliminate seawater and impurities that the marine wastes have;
C) a crushing device which is configured to crush the marine wastes collected in the first bunker;
D) a sorting device which is configured to sort the crushed marine wastes by properties and shapes which passed through the crushing unit;
E) a sorted thing storing tank which is configured to store depending on properties and shapes the sorted things sorted by the sorting unit;
F) a drying device which is configured to second eliminate the water contained in the sorted combustible things of the sorted thing storing tank;
G) a second bunker which is configured to store the sorted combustible things dried by the drying unit;
H) a first crane which is configured to input the sorted combustible things collected at the second bunker into an incineration furnace;
I) an incineration furnace which is configured to incinerate the sorted combustible things which are transferred from the second bunker through the first crane and are inputted for thereby producing heat energy source;
J) a boiler which is configured to use the heat energy source generated through the incineration furnace for the sake of electric power generation;
K) an ash treatment device which is configured to collect and treat the ash of the sorted combustible things incinerated by the incineration furnace;
L) an electric power generator which is configured to generate electric power by collecting the waste heat of the boiler;
M) an electric power transmission device which is configured to transmit electric power by connecting the electric power generated by the electric power generator to a submarine cable installed in island regions; and
N) an assistant driving force device which is configured to supply electric power when a ship starts sailing and to supply it as an assistant driving force.

2. The ship of claim 1, wherein B) the first bunker comprises:
a water dropping section disposed at the lower most portion of the bunker so as to first eliminate seawater components contained in marine wastes for the sake of collecting seawater;
a filtering layer which is formed at the top of the water dropping section and is formed of a rock layer, a gravel layer and a sand layer which are configured to filter impurities contained in the seawater;
a marine waste storing layer which is provided at the top of the filtering layer and stores the marine wastes; and
a water treatment device which is configured to purify seawater collected at the water dropping section and impurities and discharge to sea or feedbacks the purified treatment water to the top of the storing layer for thereby enhancing the impurities elimination efficiency of the marine waste.

3. The ship of claim 1, wherein D) the sorting device comprises a metal sorting unit which sorts out metals contained in the marine waste, and a nonferrous sorting unit which sorts out nonferrous metals.

4. The ship of claim 1, wherein E) the sorted thing storing tank comprises a sorted metal storing tank, a sorted nonferrous metal storing tank and a sorted combustible thing storing tank which are all configured to store the sorted things depending on properties and shapes.

5. The ship of claim 1, wherein H) the first crane comprises:
pole frames which are provided at the opposite positions in forward, backward, leftward and rightward directions in the second bunker and the incineration furnace and are fixed in the interiors of the second bunker and the incineration furnace;
support frames which are arranged in the leftward and rightward directions of the pole frame and are positioned at both ends of each pole frame positioned in the forward and backward directions;
upper and lower transfer device which are arranged at both ends of each support frame and connects the support frames to be supported by the pole frames and transfer upward and downward the support frames;
transfer frames which are horizontally arranged at the front sides of the pole frames wherein their both ends are positioned at the lower side of each support frame and are open in the direction from the second bunker to the incineration furnace and move toward the interconnected position;
forward and backward transfer device which are disposed at the tops of both ends in leftward and rightward directions of the transfer fame and connect the transfer frame to be supported by the support frames and transfer the transfer frames forward and backward;
a bucket body which is disposed at a lower side of the transfer frame and is held by the operations of the bucket operation device for a heavy thing to be transferred;
a leftward and rightward transfer device which is disposed at the top of the bucket body and connects the bucket body and the bucket operation device to be supported by the transfer frame and transfers the bucket body in leftward and rightward directions; and
a connection frame which is disposed between the second bunker and the incineration furnace and is connected to the transfer frame disposed in the interior of the second bunker and the incineration furnace, so the bucket body can transfer a heavy thing while moving between the second bucker and the incineration furnace.

6. The ship of claim 1, wherein I) the incineration furnace is configured to incinerate a stoker method of a horizontal grate type.

7. The ship of claim 1, wherein K) the ash treatment device comprises an ash cooling water, a wet chain conveyor and an ash storing tank configured to store ash, and the wet chain conveyor includes a gate type valve at an inlet and an outlet of the wet chain conveyor for the purpose of transferring the ash at the end portions of the incineration furnace to the ash storing device through the ash cooling water.

8. The ship of claim 1, wherein K) the ash treatment device comprises an ash cooling water, a wet chain conveyor and an ash storing tank, and the inlet which the ash at the end portion of the incineration furnace enters the ash cooling water is formed of an ash dropping prevention unit, and the depth from the end portion of the incineration furnace to the ash cooling water is 3 to 6 times the depth of the ash cooling water, and the wet chain conveyor includes a support for easily transferring ash on the surface of the belt, and the inclination of the wet chain conveyor is 30 to 35 degrees with respect to the surface of the ash cooling water from the ash cooling water to the end portion of the as storing tank.

9. The ship of claim 1, wherein K) the boiler operates with a steam temperature of 300 to 400°C and a steam pressure of 30 to 50bar, and the material of the steam pipe of the boiler is a stainless steel, and there is provided a pure water producing unit for supplying pure water when supplying a make-up water to the boiler.

10. The ship of claim 1, wherein L) the electric power generator is an electricity generating device which uses a turbine by collecting the waste heat of the boiler and is an electric power generation device which is configured to supply electric power to the sailing of a ship or island regions, the electric power being 60 to 70% of the electric power generated based on a daily treatment amount of the sorted combustible things, and there is provided an electric power supply control device for controlling the supply of electric power depending on the purpose of an electric power supply to the sailing of the ship or island regions.

11. The ship of claim 1, wherein the electric power transmission device comprises a rectifier for rectifying the electric power generated by the electric power generator into AC forms which are required in the island regions for thereby supplying AC power.
